# EUROPEAN PATENT SPECIFICATION

(11) **EP 1 634 190 B1**
(45) Date of publication and mention of the grant of the patent: **25.07.2012**
(21) Application number: 04731004.0
(22) Date of filing: 04.05.2004
(51) Int. Cl.: G06F 17/30

(54) **GENERATING ELECTRONIC REPORTS OF DATA DISPLAYED IN A COMPUTER USER INTERFACE LIST VIEW**
ENTWERFEN VON GESCHÄFTSINHALTEN FÜR DIE BERICHTERSTATTUNG
PRODUCTION DE RAPPORTS ELECTRONIQUES DE DONNEES AFFICHES DANS UNE VUE DE LISTE D'INTERFACE D'UTILISATEUR D'ORDINATEUR

(30) Priority: 13.06.2003 US 478255 P; 31.10.2003 US 698089
(43) Date of publication of application: 15.03.2006
(73) Proprietor: SAP AG, 69190 Walldorf (DE)
(72) Inventor: BHATT, Ankur, Kundalahalli, Bangalore 560037 (IN); SARANGARAJAN, Raghunandan, Bangalore 29 (IN)
(74) Representative: Müller-Boré & Partner Patentanwälte
(86) International application number: PCT/EP2004/004729
(87) International publication number: WO 2004/111872

(56) References cited:
- US-A- 6 031 625
- "The Monarch Report" THE MONARCH REPORT, [Online] February 2003 (2003-02), - February 2003 (2003-02) pages 1-7, XP002298633 LOWELL, MA, USA Retrieved from the Internet: URL:http://www.datawatch.com/pdf/products/ monarch/Feb03_Report_Final.pdf> [retrieved on 2004-09-29]
- "e.Report Option" ACTUATE, [Online] 2002, - 2002 pages 1-7, XP002298634 SAN FRANCISCO, CA, USA Retrieved from the Internet: URL:http://www.actuate.com/download/A8erep ortoption.pdf> [retrieved on 2004-09-29]
- "Web-Enabled Business Reporting" MORGAN STANLEY, [Online] September 2002 (2002-09), - September 2002 (2002-09) pages 1-10, XP002298635 Retrieved from the Internet: URL:http://www.ey.com/global/download.nsf/ International/WEBR_Sept02_Whitepaper/$file /Sep02_WEBR_Whitepaper.pdf> [retrieved on 2004-09-29]
- ANONYMOUS: "OLAP Reporting with Crystal Reports 9. OLAP and Analytics", INTERNET CITATION, 30 September 2002 (2002-09-30), XP002268913, Retrieved from the Internet: URL:http://support.crystaldecisions.com/co mmunityCS/TechnicalPapers/cr9_o lap.pdf [retrieved on 2004-02-03]
- SEAGATE SOFTWARE IMG HOLDINGS ET AL: 'Crystal Reports (TM) 8.5 Technical Reference Guide', [Online] 01 January 2001, SCOTTS VALLEY, CALIFORNIA, USA, XP055010119 Retrieved from the Internet: <URL:http://www.dynalivery.com/downloads/CR 8_5Techref.pdf> [retrieved on 2011-10-20]

## Description

### CROSS REFERENCE TO RELATED APPLICATIONS

This application claims priority from U.S. Provisional Application No. 60/478,255, filed June 13, 2003, and titled "Designing Business Content, Reports, Charts and Instant Reports for Mobile Applications," which is incorporated by reference in its entirety.

### TECHNICAL FIELD

The description relates to generating electronic reports of data displayed in a computer user interface list view.

### BACKGROUND

Businesses utilize electronic reports to summarize information for presentation to clients, potential clients, internal management and development teams, etc. Reports may be used to describe recent sales orders, potential sales opportunities, task lists or customer information, to list just a few examples. Several reporting tool software applications are currently available, for example, Microsoft^{®} Excel, Microsoft^{®} Word and Seagate Crystal Reports. Nevertheless, software applications for designing and processing business content to be used by reporting tool applications are less prevalent.

One example of a software application that can be used to design business content for reports is based on business queries. The application requires a user, such as a

### SUMMARY

The invention provides techniques for instantly generating an electronic report of data displayed in a

Document US 6 031 625 describes a system for retrieving reports and for extracting selected fields from print streams. The system is updated to search for new data fields or to add revised report formats by updating an extraction database. Updating of the extraction database may be performed by a user through a graphical user interface or menu system at a display terminal.

Technical report titled "OLAP reporting with Crystal Reports 9. OLAP and Analytics" describes a reporting tool which can be used to create reports from online analytical processing (OLAP) cubes. In particular, the technical report outlines a process required to produce a number of reports based on OLAP data and how to combine report parts based on multiple OLAP data sources into a single report.

Technical report of Seagate Software Img Holdings et al titled "Crystal Reports(TM) 8.5 Technical Reference Guide" describes development examples for using the Crystal Report Print Engine in a Visual Basic program.

### SUMMARY

The invention provides techniques for instantly generating an electronic report of data displayed in a computer user interface list view. In general, the list view has data objects that each comprise fields and corresponding attributes for the fields.

In one general aspect, the invention provides a method according to claim 1 that includes receiving a user selection of at least one object field displayed in the list view. The method also includes generating an output file that an external reporting application can use to generate a tabulated report, where the tabulated report includes the attributes corresponding to the selected at least one object field. The method further includes launching the external reporting application and generating the tabulated report with the attributes corresponding to the selected at least one object field.

In various implementations, the method may include one or more of the following features. The method may further include receiving a user selection of the external reporting application, for example, Microsoft^{®} Excel and HTML. The method may include displaying a view of the list view wherein the tabulated report is triggered from the view of the list view. The data objects for the list view may be retrieved from a database according to a search feature prior to displaying the view of the list view. The output file may include the selected at least one object field and the corresponding attributes, and may be an ActiveX Data Object Recordset. The generation of the output file that the external reporting application can use to generate the tabulated report may involve transferring the output file to a reporting-tool-specific interface component capable of plug-and-play interaction with the external reporting application.

In another aspect, the invention provides computer-readable medium with program instructions stored thereon that when executed perform the functions of the methods described above. When performed, these functions generate an electronic report from a computer user interface list view.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is a block diagram of a system having a business content provider component that may utilize aspects of the invention;
FIG. 2 is a conceptual depiction of the business content provider component from FIG. 1;
FIGS. 3-5 are screen snapshots of a computer display in accordance with embodiments of the invention;
FIGS. 6-7 are screen snapshots of a computer display showing examples of instant reports; and
FIG. 8 is an exemplary flowchart illustrating an example of how the business content provider component of FIGS. 1-2 may operate.

Like reference symbols in the various drawings indicate like elements.

### DETAILED DESCRIPTION

Embodiments of the invention may be used to generate a report directly from any computer user interface list view and in an external and generally applicable reporting software application. The report generation function will be described in the context of a business content provider that is, in an embodiment, integrated into a software program application for mobile sales management. A mobile sales application can be used by mobile users (e.g., laptop or personal digital assistant (PDA) users) to manage the interactions a company may have with its customers, for example, marketing, sales, and service functions. In other implementations, the report generation function may be integrated into other types of program applications (such as customer relationship management applications, supply chain management applications, or any other application where reporting is utilized), or may exist as an independent software program application.

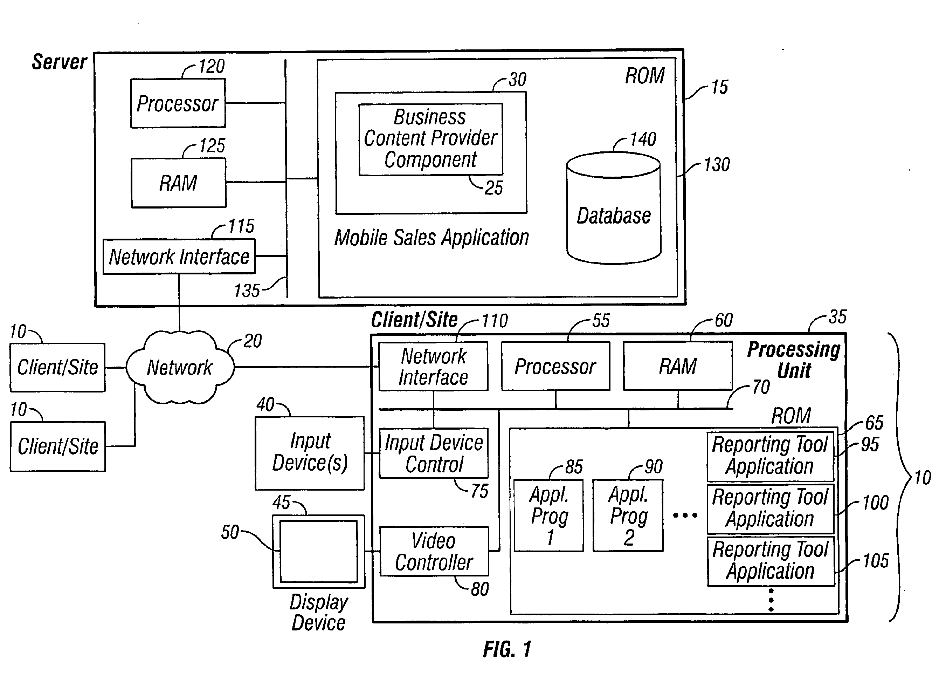

Before discussing how the business content provider prepares content for reporting and how a report is generated, it will be helpful to discuss an environment in which the business content provider and report generation function may operate. FIG. 1 shows client site computer systems 10, a central server 15, and a network 20, over which the client computer systems 10 may communicate with the server 15.

A business content provider component 25 is integrated into a mobile sales application 30, which resides on server 15 in this example. The business content provider component 25 can be used to provide content for reports, such as an "instant report," to be generated in an external reporting tool. An "instant report" is a tabulated report generated without a formal report design process. This allows a user to quickly and easily select desired content, including specific fields for a list of data objects, to be included in the report. As such, users who may lack the time or the technical competence to design complicated report structures may still generate reports for presentation to clients, business associates and company management, or for personal use.

Moving now to client site computer system 10, the system includes a processing unit 35, one or more input devices 40, and a display device 45 upon which a user may be presented displays. The display device 45 has a video screen 50 upon which displays may appear. As is conventional, the processing unit 35 includes a processor 55, random access memory (RAM) 60, and read-only memory (ROM) 65, all interconnected by a system bus 70. Input device controllers 75, also connected to the system bus 70, receive command signals from input devices 40 and forward the command signals in the appropriate format for processing. A video controller 80, connected to the system bus 70, receives video command signals and generates the appropriate video signals that are forwarded to the display device 45 so that the desired display is provided on the screen 50. The computer system 10 is not limited to a personal computer such as a desktop or laptop, but could instead include a PDA (or other handheld computing device), a terminal, a workstation, or other such device. The client computer systems 10 could be mobile units at various sites in a sales region, for example.

ROM 65, as is conventional, provides non-volatile data storage including magnetic disk memory, flash memory, removable non-volatile storage media, and the like. Various application programs 85, 90, etc., as is conventional, have program instructions that may be loaded into RAM 60 during operation. Processor 55 then may execute the program instructions to perform desired program functions. ROM 65 further includes reporting tool applications 95, 100, 105, etc. The reporting tool applications may be generically applicable reporting tools, such as Microsoft^{®} Excel, Microsoft^{®} Word, Seagate Crystal Reports, etc., or may be a browser such as Microsoft^{®} Internet Explorer or Netscape Communicator. The reporting tool applications 95, 100, 105, etc., may receive the content for the instant reports from the business content provider component 25 for generation and display on screen 50. The components just described could be combined or separated in various manners, and could be stored in various manners, such as on various non-volatile storage media.

Computer system 10 has a network interface 110 connected to its system bus 70, and to network 20. As such, computer system 10 may access server 15 via network 20 to run applications residing on the server 15. Network 20 may be, for example, a local area network (LAN), wide area network (WAN), or the Internet. Server 15 includes a network interface 115, one or more processors 120, RAM 125 and ROM 130, all interconnected by a bus 135. The server's network interface 115 provides the connection to network 20.

The server ROM 130 includes the mobile sales application 30, which includes the business content provider component 25 that can be used to provide instant reports, as will be described below. Server ROM 130, in this example, also includes data stored in database 140, although in other implementations separate databases or a separate database server may be used.

A user can use an input device 40, such as a mouse, keyboard, trackball, stylus, joystick, etc., to provide input and make selections that can affect application program operation. I/O devices such as a printer (not shown) can be used to print results. Devices such as memory controllers, power supplies, etc., are omitted for clarity. The components described with regard to FIG. 1 could be combined or separated in various manners. Any of the entities described above in client or server non-volatile memory 65 or 130 could alternatively be located in a separate server, database, or computer system, and could be stored on various non-volatile storage media.

In one implementation, the business content provider component 25 is made up of several different application program modules, some of which reside on a central server, such as server 15, while others reside on a client computer system, such as system 10. In other implementations, the business content provider component 25 can reside entirely on the server 15 (as depicted in FIG. 1), or entirely on the client computer system 10.

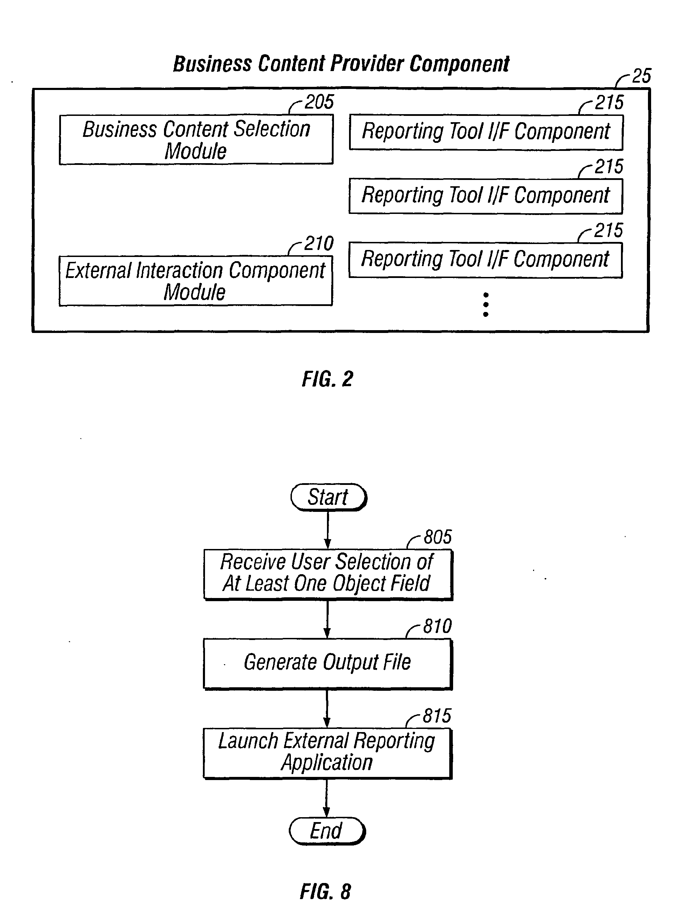

FIG. 2 shows the business content provider software component 25 of FIG. 1, which is composed of several modules. A business content selection module 205 permits a user to work with list views of data, trigger an instant report on the data, select desired object fields of the list view to be included in the instant report, and specify an external reporting tool to generate the report. The business content selection module 205 can then create a business collection that includes an identifier specifying the chosen reporting tool, and the group of selected object fields and the corresponding data from the list view. In some implementations, the business collection can be persistently stored for later use in database 140, as an extensible Markup Language (XML) document, for example.

An external interaction component module 210 can then receive the business collection from the business content selection module 205 and convert the information and associated data to a common data structure. One such common data structure is an ActiveX Data Object (ADO) Recordset standard output format. The external interaction component module 210 also determines which reporting tool application will be used to generate the report (e.g., by reading a reporting tool ID), and interacts with a corresponding reporting tool interface component 215. In certain implementations, the choice of reporting tool application may determine the particular common data structure to be used, depending on the format the reporting tool application expects to receive. The external interaction component module 210 passes the common data structure to the appropriate reporting tool interface component 215, which then forwards it to the associated reporting tool application for report generation. In one implementation, the number of reporting tool interface components 215 in the business content provider component 25 may be equal to the number of reporting tool applications supported. In other implementations, the number of reporting tool interface components 215 in the business content provider component 25 may be either more or less than the number of supported reporting tool applications.

An architecture including reporting-application-specific components, such as components 215, facilitates easy integration of external reporting tools. To add support for a new reporting tool application, a new interface component 215 is simply added to the business content provider component 25, without having to make coding changes to existing modules. This can minimize or eliminate the need for shutdown periods where the application is taken off-line for updates. The external interaction component module 210 and the reporting tool interface components 215 provide a plug-and-play interface, thus simplifying the process of adding and supporting new reporting tools. Referring again to FIG. 1, the reporting tool applications 95, 100, 105, etc., need not be pre-configured to operate with the business content provider component 25, thus expanding the universe of potential applications that might use generic reporting tool applications for report generation.

In the following example, a user is using the business content provider component 25 to work with a list view of data that includes a list of activities involving various business partners, and decides to trigger an instant report on the data. Instant reports may be triggered from any list view of data. The user may wish to initiate an instant report to capitalize on advanced features such as macros, formulas, printing to a printer, or enhanced formatting, setup and presentation features, etc., that may be available in the external reporting tool application. The user may be a human operator, a software application running without human intervention, or various combinations of both.

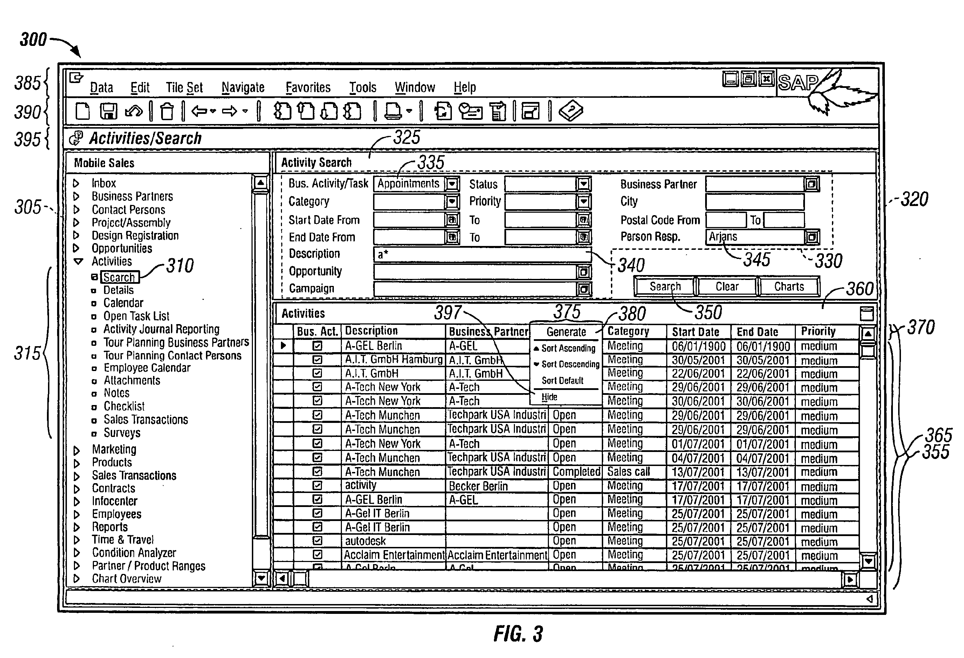

FIG. 3 shows an exemplary display 300 that may be presented, on screen 50 shown in FIG. 1, to the user of the business content provider component 25. A collection 305 of selectable business entities labeled "Mobile Sales," near a left edge of display 300, identifies various modes that the business content provider component 25 may operate in. In this example, an "Activities" business entity 310 is active, and includes a group 315 of tile sets ("Search" (currently selected), "Details," "Calendar," "Open Task List," ... , and "Surveys"), each of which is associated with a group of one or more tiles (that is, a group of views on the display, each of which may include a work area). The "Activities" entity 310 may be used to work with information on business activities involving business partners.

The "Search" tile set includes two associated tiles shown in a content area 320 to the right of the collection 305 of business entities. Each tile has a title area and a work area. An "Activity Search" tile 325 presents a group 330 of input fields that allow a user to specify criteria for searching a collection of data, such as a collection of database objects, for example. In this example, the user has selected "Appointments" from a drop-down list in a "Bus. Activity/Task" field 335, has entered "a*" in a "Description" field 340 (to search for all objects having descriptions beginning with "a," for example), and has entered "Arians" in a "Person Resp." field 345.

The user may then select a "Search" button 350 (e.g., by using a mouse to position an indicator over the button 350 and clicking to select) to cause the database 140 to be searched according to the criteria, and the corresponding data to be retrieved. The search and retrieval functionality may be provided by various components (not shown) that make up part of the framework of the mobile sales application 30 (FIG. 1).

The data may be displayed as a list view 355 in an "Activities" tile 360, located here below the "Activity Search" tile 325. The list view 355 comprises a grid 365 of data objects arranged in rows, each data object including attributes arranged in columns within the grid 365. The attributes may contain data that describes the data objects. The list view 355 includes a row 370 of object fields that describe the attributes of the grid 365. The user can initiate an instant report by, for example, using a mouse to right-click anywhere within the list view 355. This provides a convenient method whereby the user can view the data in the list view 355 and trigger an instant report without having to enable instant reports, open other applications, or hunt for an instant reports launch button or menu item.

After the user right-clicks in the list view 355, a pop-up window 375 appears and shows a "Generate Report" option 380 that the user may select to trigger an instant report. In other embodiments, alternative methods of initiating an instant report are possible, such as making a selection from a menu bar 385 or toolbar 390, each located near the top of display 300, along with a title row 395. Alternatively, an instant reports button for initiating instant reports is possible. A "Hide" option 397 in pop-up window 375 allows a user to hide columns in the list view 355. List views and instant reports may be possible with any of the business entities shown in collection 305. A list view may also be pre-defined, not requiring a data search. Multiple list views may be presented concurrently. It may be further possible to save search criteria as a file for later use to retrieve data for list views.

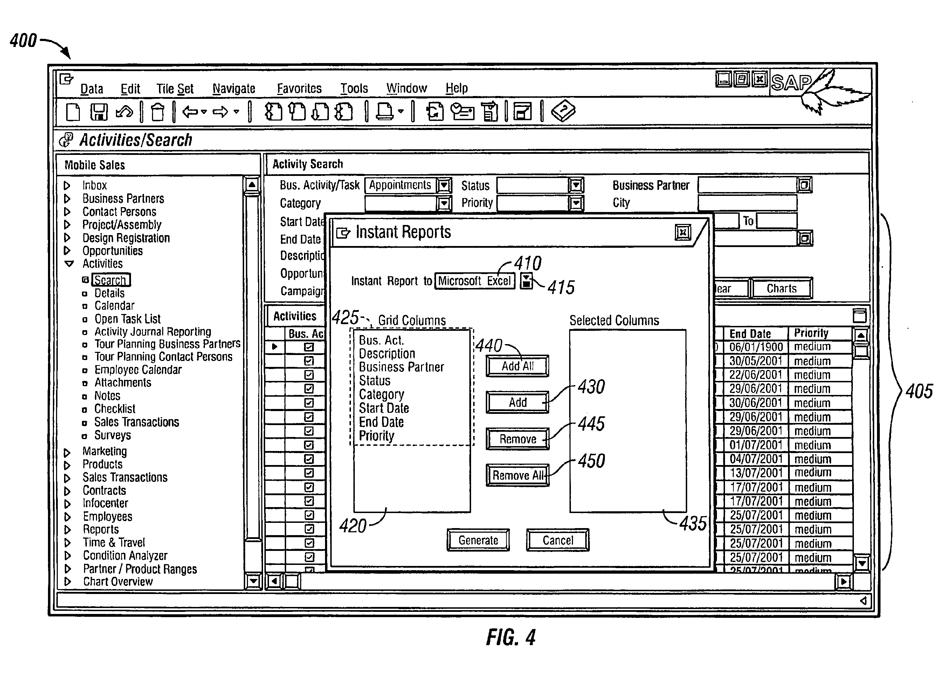

In the present example, suppose that the user selects the "Generate Report" option 380. FIG. 4 shows a display 400 that may then be presented on screen 50. A pop-up window 405, labeled "Instant Reports," includes an input field 410 (labeled "Instant Report to") that permits a user to select a reporting tool to generate the instant report. As shown in FIG. 4, the user has selected "Microsoft Excel" (e.g., by selecting from a drop-down list of choices, viewable by selecting a list indicator 415) as the reporting tool of choice. Other reporting tool choices can include Microsoft^{®} Word, Seagate Crystal Reports, or HTML, which may cause the instant report to be generated in a browser application.

Pop-up window 405 also includes a "Grid Columns" area 420 that contains a collection 425 of grid columns, which correspond to the object fields in row 370 from the list view 355 (FIG. 3). The user may specify which object fields, attributes and associated data of the list view 355 will be reported in the instant report by selecting the corresponding grid columns from the collection 425. For example, the user might select an individual grid column from the collection 425 and then select an "Add" button 430, which may cause the selected grid column to be removed from "Grid Columns" area 420 and to appear in a "Selected Columns" area 435. Similarly, the user may select an "Add All" button 440 to cause the entire collection 425 of grid columns to be moved to the "Selected Columns" area 435.

The collection 425 of grid columns may include all or a subset of the corresponding object fields from the list view 355. In this example, the available grid columns correspond to the object fields shown in the object field row 370 (note that a "Status" object field may be hidden behind window 375 in FIG. 3). Were the user to scroll right in the list view 355 shown in FIG. 3, additional object fields and attributes may be shown in the list view 355, as is conventional. Likewise, additional grid columns may then appear in the collection 425 of grid columns shown in FIG. 4.

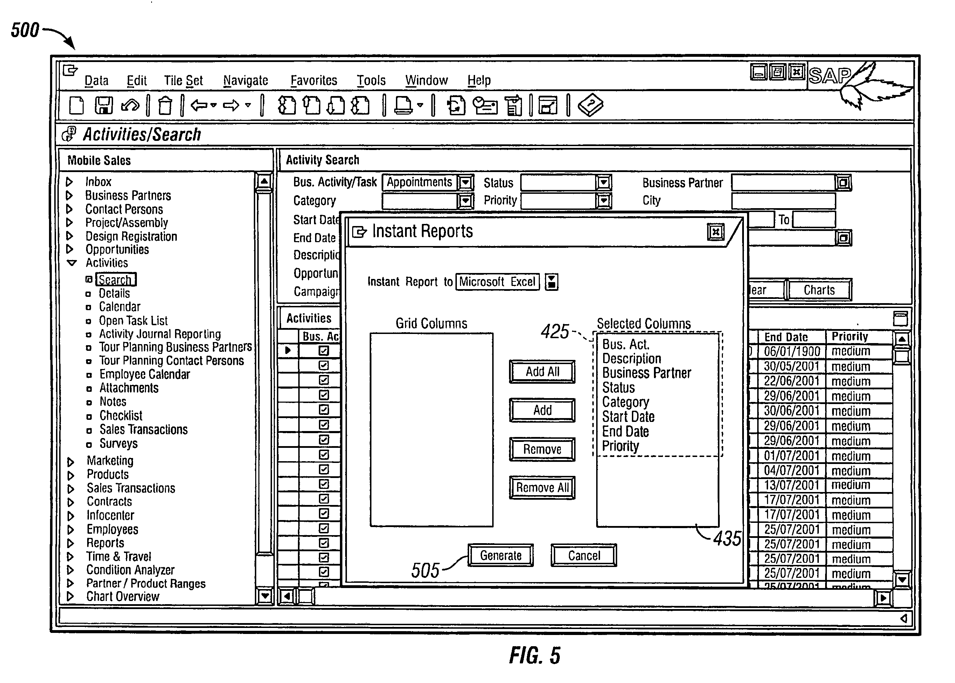

In similar fashion, individual grid columns may be removed from the "Selected Columns" area 435 by highlighting an unwanted grid column and then selecting a "Remove" button 445. All grid columns may be removed from area 435 by selecting a "Remove All" button 450. Removed grid columns may reappear in "Grid Columns" area 420. In this manner, the user can specify the desired content for the instant report by choosing appropriate grid columns, thereby tailoring the instant report to meet the needs of the user's application. FIG. 5 shows a display 500 where the entire collection 425 of grid columns from FIG. 4 has been selected and now appears in "Selected Column" area 435. This may occur, for example, when the user selects the "Add All" button 440 in FIG. 4.

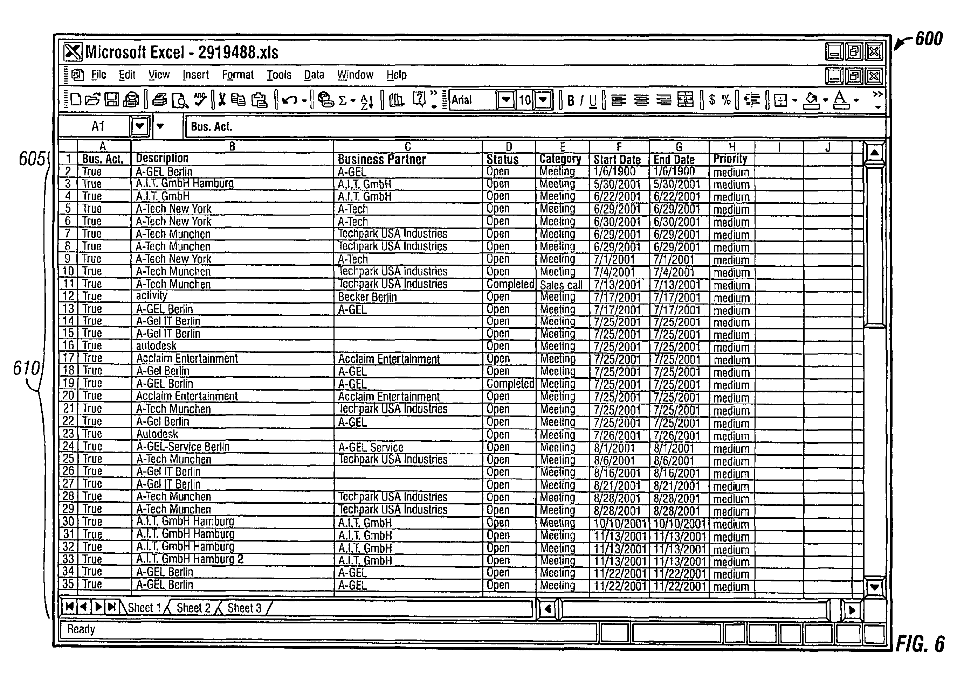

The user may then select a "Generate" button 505 to create a business collection that includes an identifier specifying the chosen reporting tool, and the group of selected object fields (corresponding to the selected grid columns 425 in FIG. 5) and the corresponding data from the list view. The business collection may be converted to a standard output format and forwarded to the appropriate external reporting application, which may then generate the instant report. Display 600, shown in FIG. 6, presents a screen snapshot of an instant report generated in Microsoft^{®} Excel. Display 600 may be shown on screen 50, and may follow from the user selecting the "Generate" button 505 shown in FIG. 5. As seen in FIG. 6, the instant report includes a first row 605 corresponding to the collection 425 of grid columns from the "Selected Columns" area 435 in FIG. 5. A grid 610 of rows and columns below the first row 605 contain the corresponding attribute data from the list view 355.

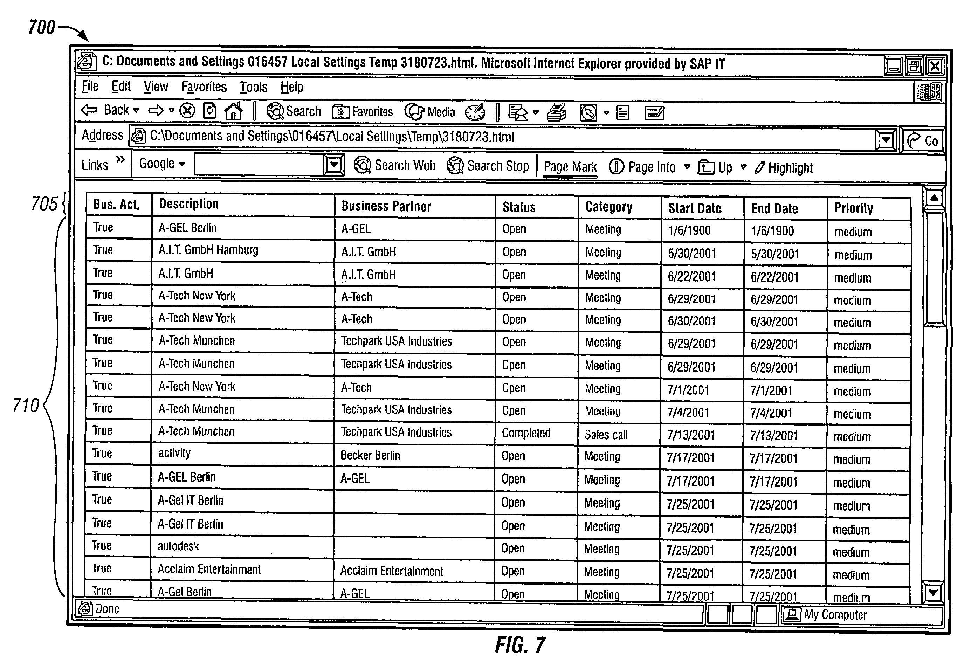

Similarly, FIG. 7 shows a display 700 that presents an instant report generated in a browser application that may be displayed on screen 50, for example, if the user were to select an "HTML" option from the input field 410 (FIG. 4) list of choices. Like the instant report shown in FIG. 6, the HTML instant report includes a first row 705 corresponding to the collection 425 of grid columns from the "Selected Columns" area 435 in FIG. 5, and a grid 710 of rows and columns below the first row 705 that contains the corresponding attribute data from list view 355.

Thus, it is seen that a user can efficiently design content for an instant report from a list view of data without having to design a layout for the report, and without having to use application programming or having to model business queries to describe the desired content. Users can selectively define the content by choosing desired object fields, thereby limiting the instant report content to attributes corresponding to the selected object fields. As such, users using a software application incorporating aspects of the invention may quickly realize reports in external reporting tool applications, and may then utilize advanced features that may be available in the reporting tool applications.

The flowchart of FIG. 8 shows an example of a process that the business content provider component 25 may perform to provide content from a list view having data objects that each comprise a plurality of attributes, with each attribute corresponding to one of a plurality of object fields. The content is to be reported in an external general reporting application. FIG. 3 shows an example of such a list view 355.

With reference to FIG. 8, a process begins, at step 805, with the receipt of a user selection of at least one object field of the plurality of object fields. The selection indicates that corresponding attributes for the data objects are to be included in a tabulated report generated in the external reporting application. FIG. 4 shows a collection 425 of object fields and FIG. 5 shows the object fields having been selected, for example by selecting the "Add All" button 440 in FIG. 4. Object fields may be selected individually, as a subset of the total collection (e.g., by highlighting two or more grid columns in the collection 425 and selecting "Add" button 430), or as the entire collection of object fields.

After the user has selected all of the object fields to be included in the report, an output file is generated (810) that the external reporting application can use to generate the tabulated report, which includes the attributes corresponding to the selected object fields. In the FIG. 5 example, generation of the output file is triggered by the user clicking the "Generate" button 505. When this occurs, the selected data (including the object fields corresponding to the columns and the object data for the columns, as well as an identifier for the selected reporting tool that is to generate a report) are passed to the external interaction component module 210 (FIG. 2). This module 210 then converts the passed data it receives to an ADO record set, and then passes the record set to the reporting tool interface component 215 (FIG. 2) that corresponds to the selected reporting tool (Microsoft^{®} Excel in the case of the FIG. 4 example). Because only those attributes corresponding to selected object fields (and not every attribute for a particular data object) will be included in the generated output file, performance may be improved.

Upon the passing of the ADO record set to the appropriate reporting tool interface component 215, that component launches the reporting tool (815) without any further user involvement. In addition, the interface component 215 then creates an electronic file for the report, for example on the local disc drive, and assigns a name to the electronic file. The component 215 then creates the columns and rows for the report, and fills the report document with the data included in the ADO record set. Finally, the report is displayed to the user, as shown for example in FIG. 6 in the case of a Microsoft^{®} Excel report.

In the case of creating an HTML document as shown in FIG. 7, the appropriate reporting tool interface component 215 launches a browser application. The interface component 215 creates the HTML page with tables and fields. This differs from the interface component 215 for the Microsoft^{®} Excel reporting tool because the Excel tool has libraries that may be used by the interface component 215 to create the tables and fields that are to be reported.

The particular embodiments discussed above are merely illustrative, and may be modified and reconfigured readily in accordance with the teachings set forth herein. By way of non-limiting example, alternative methods of selecting object fields for the instant report, such as by selecting desired object fields from the object field row 370 in the list view 355 (e.g., by double clicking on the desired object field or dragging and dropping the desired field to a selection area), are possible. A subset of data objects to appear in the instant report may likewise be selected, either directly from list view 355 or from a pop-up window offering object selection functionality. Database 140 could be located at client site 10, reporting tool applications 95, 100, 105, etc., could reside on server 15, and the FIG. 2 modules could be combined or separated in various manners, including existing separately from the business content provider component 25. In lieu of launching the reporting tool application, an output file for the instant report may be stored for later use, for example in either client or server non-volatile memory 65 or 130. A wizard may be used to assist users in selecting object fields and/or the reporting tool application. Aspects of the invention may be utilized on standalone computer systems without access to a network or server.

A number of embodiments of the invention have been described. Nevertheless, it will be understood that various modifications may be made without departing from the spirit and scope of the invention. Accordingly, other embodiments are within the scope of the following claims.

## Claims

1. A method of generating an electronic report from a computer user interface list view (355) displaying data objects that each comprise a plurality of fields and corresponding attributes for the fields, the method comprising:
displaying a view of the list view (355) and a pop-up window (405), wherein the data objects for the list view (355) are retrieved from a database according to a search feature prior to displaying the view of the list view (355), wherein, if a user scrolls in the list view (355), additional object fields and attributes are shown in the list view (355) and additional grid columns appear in a collection (425) of grid columns in a grid columns area (420) included in the pop-up window (405);
receiving, in the grid columns area (420) included in the pop-up window (405), a user selection of at least one object field of the displayed fields (step 805), wherein the user selects the at least one corresponding grid column from the collection (425) of grid columns with respect to the corresponding object field from the list view (355);
generating an output file (step 810) that an external reporting application can use to generate a tabulated report, the tabulated report to include the attributes corresponding to the selected at least one object field; and
launching, after generating the output file, the external reporting application (step 815) without any further user involvement and generating the tabulated report with the attributes corresponding to the selected at least one object field, wherein the output file includes the selected at least one object field and the corresponding attributes from the list view (355).

2. The method of claim 1 further comprising receiving a user selection of the external reporting application (415).

3. The method of claim 2 wherein the user selection of the external reporting application is selected from the group consisting of Excel and HTML.

4. The method of claim 1 wherein the output file is an ActiveX Data Object Recordset.

5. The method of claim 1 wherein generating the output file that the external reporting application can use to generate the tabulated report further comprises transferring the output file to a reporting-tool-specific interface component (215) capable of plug-and-play interaction with the external reporting application.

6. The method of claim 1 wherein the launched external reporting application generates the tabulated report.

7. Computer-readable medium comprising computer readable instructions, which when loaded and run in a computer system and/or computer network system, causes the computer system and/or the computer network system to perform operations according to a method of claim 1.

## Patentansprüche

1. Verfahren zum Erzeugen eines elektronischen Berichts aus einer Computemutzer-Schnittstellenlistenansicht (355), die Datenobjekte anzeigt, die jeweils eine Vielzahl von Feldern und entsprechenden Attributen für die Felder umfassen, wobei das Verfahren umfasst:
Anzeigen einer Ansicht der Listenansicht (355) und eines Pop-up-Menüs bzw. Dialogfensters (405), wobei die Datenobjekte für die Listenansicht (355) vor dem Anzeigen der Ansicht der Listenansicht (355) gemäß einem Suchmerkmal aus einer Datenbank abgerufen werden, wobei, wenn ein Nutzer in der Listenansicht (355) scrollt bzw. blättert, zusätzliche Objektfelder und Attribute in der Listenansicht (355) gezeigt werden und zusätzliche Rasterspalten in einer Sammlung (425) von Rasterspalten in einer Rasterspaltenfläche (420), die in dem Dialogfenster (405) enthalten ist, erscheinen;
Empfangen einer Benutzerauswahl von wenigstens einem Objektfeld der angezeigten Felder in der Rasterspaltenfläche (420), die in dem Dialogfenster (405) enthalten ist (Schritt 805), wobei der Benutzer die wenigstens eine entsprechende Rasterspalte aus der Sammlung (425) von Rasterspalten in Bezug auf das entsprechende Objektfeld aus der Listenansicht (355) auswählt;
Erzeugen einer Ausgabedatei (Schritt 810), die eine externe Berichtsanwendung verwenden kann, um einen Bericht in Tabellenform zu erzeugen, wobei der Bericht in Tabellenform die Attribute, die dem ausgewählten wenigstens einen Objektfeld entsprechen, enthalten soll; und
nach dem Erzeugen der Ausgabedatei Starten der externen Berichtsanwendung (Schritt 815), ohne weitere Benutzerbeteiligung und Erzeugen des Berichts in Tabellenform mit den Attributen, die dem ausgewählten wenigstens einen Objektfeld entsprechen, wobei die Ausgabedatei das ausgewählte wenigstens eine Objektfeld und die entsprechenden Attribute aus der Listenansicht (355) umfasst.

2. Verfahren nach Anspruch 1, das ferner das Empfangen einer Benutzerauswahl der externen Berichtsanwendung (415) umfasst.

3. Verfahren nach Anspruch 2, wobei die Benutzerauswahl der externen Berichtsanwendung aus der Gruppe ausgewählt wird, die aus Excel und HTML besteht.

4. Verfahren nach Anspruch 1, wobei die Ausgabedatei eine ActiveX-Datenobjekt-Satzgruppe ist.

5. Verfahren nach Anspruch 1, wobei das Erzeugen der Ausgabedatei, die die externe Berichtsanwendung verwenden kann, um den Bericht in Tabellenform zu erzeugen, ferner das Überführen der Ausgabedatei an eine berichtswerkzeugspezifische Schnittstellenkomponente (215) umfasst, die zu der Plug-and-Play-Wechselwirkung mit der externen Berichtsanwendung fähig ist.

6. Verfahren nach Anspruch 1, wobei die gestartete externe Berichtsanwendung einen Bericht in Tabellenform erzeugt.

7. Computerlesbares Medium, das computerlesbare Anweisungen umfasst, die, wenn sie auf ein Computersystem und/oder ein Computernetzwerksystem geladen und laufen gelassen werden, bewirken, dass das Computersystem und/oder das Computernetzwerksystem Arbeitsgänge nach einem Verfahren von Anspruch 1 durchführt/en.

## Revendications

1. Procédé de génération d'un rapport électronique à partir d'une vue de liste d'interface utilisateur informatique (355) affichant des objets-données qui comprennent chacun une pluralité de champs et d'attributs correspondants pour les champs, le procédé comprenant :
l'affichage d'une vue de la vie de liste (355) et d'une fenêtre contextuelle (405), dans lequel les objets-données pour la vue de liste (355) sont récupérés depuis une base de données en fonction d'une caractéristique de recherche avant l'affichage de la vue de la vue de liste (355), dans lequel, si un utilisateur parcourt la vue de liste (355), des champs et des attributs d'objet supplémentaires sont affichés dans la vue de liste (355) et des colonnes de grille supplémentaires apparaissent dans une collection (425) de colonnes de grille dans une zone de colonnes de grille (420) incluse dans la fenêtre contextuelle (405) ;
la réception dans la zone de colonnes de grille (420) incluse dans la fenêtre contextuelle (405) d'une sélection d'utilisateur d'au moins un champ d'objet des champs affichés (étape 805), dans lequel l'utilisateur sélectionne l'au moins une colonne de grille correspondante parmi la collection (425) de colonnes de grille par rapport au champ d'objet correspondant provenant de la vue de liste (355) ;
la génération d'un fichier de sortie (étape 810) qu'une application d'établissement de rapports externe peut utiliser pour générer un rapport tabulé, le rapport tabulé devant inclure les attributs correspondant à l'au moins un champ d'objet sélectionné ; et
le lancement, après la génération du fichier de sortie, de l'application d'établissement de rapports externe (étape 815) sans aucune autre implication de l'utilisateur et la génération du rapport tabulé avec les attributs correspondant à l'au moins un champ d'objet sélectionné, dans lequel le fichier de sortie inclut l'au moins un champ d'objet sélectionné et les attributs correspondants provenant de la vue de liste (355).

2. Procédé selon la revendication 1, comprenant en outre la réception d'une sélection d'utilisateur de l'application d'établissement de rapports externe (415).

3. Procédé selon la revendication 2, dans lequel la sélection d'utilisateur de l'application d'établissement de rapports externe est sélectionnée parmi le groupe constitué d'Excel et de HTML.

4. Procédé selon la revendication 1, dans lequel le fichier de sortie est un ensemble d'enregistrements d'objets-données ActiveX.

5. Procédé selon la revendication 1, dans lequel la génération du fichier de sortie que l'application d'établissement de rapports externe peut utiliser pour générer le rapport tabulé comprend en outre le transfert du fichier de sortie à un composant d'interface spécifique à un outil d'établissement de rapports (215) capable d'interaction prête à l'utilisation avec l'application d'établissement de rapports externe.

6. Procédé selon la revendication 1, dans lequel l'application d'établissement de rapports externe lancée génère le rapport tabulé.

7. Support lisible par ordinateur comprenant des instructions lisibles par ordinateur qui, lors de son chargement et exécution dans un système informatique et/ou système de réseau informatique, provoque la réalisation par le système informatique et/ou le système de réseau informatique d'opérations selon un procédé selon la revendication 1.
